# EUROPEAN PATENT APPLICATION

(11) **EP 4 617 030 A1**
(43) Date of publication of application: **17.09.2025**
(21) Application number: 25162670.1
(22) Date of filing: 10.03.2025
(51) Int. Cl.: B29C 33/00, B29C 33/04, B29C 33/06, B29C 33/30, B29C 70/46, B29C 70/68, B29C 43/56, B29C 33/20

(54) **HOT-MOLDING APPARATUS**

(30) Priority: 14.03.2024 IT 202400005743
(71) Applicant: Alia Mentis S.r.l., 31050 Vedelago TV (IT)
(72) Inventor: Paronetto, Giuseppe, 31050 Vedelago (TV) (IT); Paronetto, Giampietro, 31050 Vedelago (TV) (IT); Tessaro, Luca, 31050 Vedelago (TV) (IT)
(74) Representative: Citron, Massimiliano

(57) **Abstract**

A hot molding apparatus is described for producing a compound object consisting of a solid internal core and an external carbon layer covering the entire core, the internal core and the external carbon layer being contained in two overlapping mold shells, comprising:
- a heating chamber;
- two clamping members installed inside the chamber configured to delimit a loading space between them to receive the two shells therein;
- means for opening and closing the chamber so as to respectively make said space accessible to the shells from the outside or isolate, e.g. hermetically, the chamber with respect to the external environment;
- means for relatively moving at least one of the two clamping members towards the other in order to press the shells against each other when respectively installed in the chamber;
- means for heating the shells while the shells are arranged in the chamber and between the clamping members.

## Description

The invention relates to a hot-molding apparatus configured to mold a solid composite object consisting of an internal core and an external carbon shell.

It is known to produce cores from powdered material, see e.g. EP2697028, which are covered with layers of carbon, inserted into a mold and heated in an oven to form a composite part with the shape of the mold cavity. Such mold is a solid block of steel milled to obtain the cavity. The mold is therefore very expensive to make, heavy to handle and energy-intensive in terms of its heating.

The main object of the invention is to improve this state of the art.

Another object of the invention is to create a more productive and less expensive molding apparatus.

Here we define with the term *core* an object obtained by molding - and consisting only of - powdered material or in the form of microspheres or particles, in particular like the one defined below.

*Composite object* is defined here as an object made up of said solid internal core and an external layer covering the entire core. Preferably the external layer is carbon or a carbon lamination, e.g. impregnated with resin or *pre-preg .*

A hot-molding apparatus is proposed to produce the composite object, the inner core and the outer layer being contained in two overlapping mould shells, comprising:
- a heating chamber comprising
   means, e.g. a movable wall, for opening and closing the chamber so as to make the chamber accessible from the outside or to isolate the chamber from the external environment, respectively,
- two clamping members installed inside the chamber to delimit a loading space and configured to receive the two shells,
- means for relatively moving at least one of the two clamping members towards the other in order to press the shells against each other when respectively installed in the chamber,
- means for heating the shells when they are arranged in the chamber and between the clamping members, in particular means installed in the shells and/or in the clamping members to transfer heat to the shells.

Such a press is preferably equipped to accommodate a plurality of shell molds simultaneously, with the advantage of easy and fast loading of the molds, i.e. the shells.

The apparatus advantageously allows heating and simultaneously pressing the core and the outer layer when they are contained in the mold shells inside the press.

The clamping members may be press plates, e.g. flat or, more preferably, comprise or consist of two dies each having a cavity shaped to house and reproduce in negative the shape of one of said mould shells.

Another advantage of the apparatus is that the dies or clamping members, once arranged, can subsequently accommodate many mold shells, and through simple and fast loading.

The two mold shells have an internal cavity respectively and are combinable to obtain an overall closed mold cavity given by the juxtaposition of the individual cavities of the shells. The overall cavity is configured to accommodate the carbon-wrapped core when the shells are superimposed and/or attached to enclose the core and the carbon.

The shells can then be produced with structures that are much lighter, thinner and easier to build than a conventional solid mold. The lower mass of the shells translates into lower thermal inertia, thus much steeper heating ramps and shorter curing times.

The two dies have the advantage:
1) to uniformly heat the shells (which are relatively thin), and thus the materials to be molded inside the shells; and
2) to prevent the shells from deforming due to temperature or repeated molding cycles.

It is understood that what will be said below for dies applies *mutatis mutandis* for the clamping members or press plates, and is not repeated for brevity.

An advantage of the apparatus is that it promotes the adoption of a very effective heating technique, namely induction heating. For this purpose, the apparatus comprises electrical conductors placed in at least one die and configured to heat, when electrically powered, the two shells via electromagnetic induction when the shells are placed in the cavities of the dies or between the clamping members.

Another advantage of the device is that the expensive and complicated induction circuitry is applied to the press and not to the mold, so only one is needed. In other words, the press needs to be equipped only once, while the mold shells can remain simple to construct.

If the shape of the object to be molded changes, the shells that give it its shape and also the dies (where present) change.

One problem is that for induction heating to work, a predetermined distance between the induction circuitry and the mold shells must preferably be ensured. Furthermore, if during curing, due to different expansion coefficients, the shape of the shells and/or dies changes due to the temperature, the performance and quality of the molding can suffer. Deformations of the mold shells cause a loss of dimensional control in the induction process, which requires a constant gap between the inductor and the material to be induction-heated.

To preserve the relative position between the dies and the mold shells, preferably each die is mounted suspended cantilevered from a wall of the chamber by means of rigid members distributed on the surface of the die, one end of each rigid member being constrained to the die and

the opposite end being constrained to the wall of the chamber.

The rigid members counteract the deformations of the dies and guarantee the dimensional conformity of the mold shells. Through the force of the press impressed on the dies, the shells, when they are no longer in shape, regain their original shape.

For the same purpose, preferably the mold shells and the dies are made of the same material. Thus the relative thermal expansions compensate each other.

For example, the mold shells and/or dies are made of magnetic or non-magnetic metal, preferably produced using *3D printing technology.*

Preferably the mold shells and/or dies are made of steel, preferably *invar* steel which has an expansion coefficient comparable to that of carbon.

*Invar* is the trade name for a nickel steel (about 36%), also containing traces of manganese and other members.

In one variant, the mold shells are made of carbon and the dies are made of steel, preferably *invar* steel. This solution has the advantage of equalizing the expansion coefficient of the mold shell to that of the molded product shell.

The apparatus preferably comprises means for heating the mold shells by convection, which is advantageous in this variant.

In one variant, one or each mold shell is a heating member, i.e. it is configured to raise the temperature of the core and the carbon it contains. For this purpose, one or each mold shell comprises heating means.

In particular, one or each mold shell comprises internal channels configured for the circulation of a heating or cooling fluid, e.g. oil or water, to respectively heat the core and carbon inside the mold shells or cool them.

For example, the fluid circulates at 150°C for 1 hour to heat, and then at 60°C for 10 minutes to bring the mold shells to 70°C.

For the same purpose, the apparatus comprises means for circulating a heating or cooling fluid inside channels formed within the volume of the shells and/or dies.

To promote the absence of defects in the molded product, the apparatus preferably comprises means for reducing the gas pressure within the chamber, so as to draw residual air out of the shells as the shells are placed in the chamber of the press. Residual air can then be drawn from the shells before starting the curing, and when the mold shells are already placed inside the dies.

Unlike conventional autoclave treatment, the air is extracted from the core and carbon while they are already in the mold shells. Since the mold shells are not moved or manipulated after the air has been extracted from them, the % of residual air is kept very low, preventing the shells from re-capturing additional air from the outside environment.

Preferably said means for reducing comprise means for sucking air from inside the chamber toward the outside of the chamber (e.g. a vacuum pump).

Another advantage of the apparatus is that also partially-open mold shells can be inserted into the dies to improve the extraction of residual air. Preferably, the apparatus for this purpose comprises spacer members placeable between the two shells when the shells are provided in the cavities of the dies, in order to keep the shells slightly separated.

It is known that designing and manufacturing an induction circuit on a mold is time-consuming, while for a sample or a pre-test series speed and ease of modification are necessary. In an advantageous variant, the apparatus solves the problem by allowing the use of different types of heating at successive times.

For this aim the cavity of at least one die has a surface in which grooves are uniformly distributed, and the apparatus comprises
a removable covering member configured to be applied over the cavity of the die to cover and plug the grooves transforming them into closed channels, and
the means for heating comprise means for circulating a heating fluid into the channels which have been closed by the covering member.

With this configuration the shell heating system is prepared quickly.

With the transition to the mass production, now defined in its parameters, it is possible to move on to the more efficient induction heating, therefore the means for heating comprise electrical conductors placed in said grooves and configured to heat the two shells via electromagnetic induction when the shells are placed in the cavities of the dies.

It is enough to simply insert or remove the covering member and the electrical conductors to quickly switch from one heating system to the other.

In one variant, the press comprises means for circulating a heating or cooling fluid inside channels obtained within the volume of the shells.

Preferably, the dies have a concave shell shape, to better adapt to the shape of the mold shells and to have low thermal inertia (like the mold shells).

Even the means for moving may have different embodiment.

Preferably, for simplicity, at least one die is mounted integrally to a wall of the chamber, the wall being movable, preferably so as to determine the isolation or opening of the chamber with respect to the external environment.

In one variant, the means for moving comprise means mounted between a, fixed or movable, wall of the chamber and a die in order to move such die relative to such wall.

In one variant, the means for moving comprises means mounted between a fixed or movable part of the chamber and a die for moving such die relative to such part.

The movement of one or each die and/or of said part may contribute to the closing of the chamber, but not necessarily; that is, such part does is not or does not constitute necessarily a wall of the chamber. That is, the dies may be moved by dedicated means that are installed inside the chamber but which do not have the function of closing or opening the chamber, such as, for example, a movable wall of the chamber.

For simplicity of construction, the dies are preferably mounted so that the concavity of one die faces the concavity of the other die, and the means for moving are configured to translate at least one die toward the other. More preferably, the dies are mounted perpendicularly to one another and in a translatable manner, the translation then of only one being sufficient to bring them into contact and enclose the shells within them.

In one variant the dies are mounted side by side and the means for moving are configured to flip one die over the other.

Preferably the apparatus is configured to cool the mold shells after the curing, so as to shorten molding times and minimize handling of the mold shells. For this purpose the apparatus comprises means for introducing a cooling fluid, e.g. a liquid, into the chamber.

In particular, the apparatus comprises
a basin of liquid, e.g. water or oil, and
means for relatively moving the chamber and the basin to immerse the chamber into the liquid in the basin.

In particular, the apparatus comprises means for opening the chamber so that the liquid in the basin invades the chamber and submerges the shells and/or dies. In particular, the means for opening coincide with said means for moving said or one movable wall of the chamber.

In one variant, the liquid basin is stationary and the chamber is movable, or vice versa.

In particular, said core is an object obtained by hot molding of - and constituted only of - powdered material or in the form of microspheres or particles. In particular, the powdered material comprises - or consists of - expanded particles and non-expanded particles, the particles being made of plastic material, of closed shape, hollow and filled with gas.

Plastic microspheres filled with gas may be used as particles for the core. In particular, the powder material to be molded is preferably composed by weight of 10÷70% of expanded microspheres and 90÷30% of non-expanded microspheres, the microspheres being made of plastic material, closed in shape, hollow and filled with gas (flammable). These values guarantee advantageous performance and weight suitable for the applications, in particular excellent results of impact absorption and lightness. The expanded microspheres are essential, and act as a binder or filler for the other non-expanded particles. In fact, the expanded microspheres are the filling member (filler) and act as a binder preventing the other expandable microspheres (not yet expanded), which are heavier, from falling by gravity to the bottom of the mold and thickening. Instead, the expanded microspheres keep the expanding microspheres suspended uniformly throughout the material. This is why the presence of expanded and non-expanded microspheres guarantees the homogeneity of the density of the entire core, guaranteeing uniformity of mechanical performance.

The microspheres are generally spherical in shape and very small (10÷40 µm in diameter). Note, however, that size is not essential.

Preferably the two mold shells are metallic, e.g. made of aluminum.

As preferred variants, to be used alone or in combination, the apparatus comprises:
means for reducing the gas pressure within the chamber to draw residual air out of the shells when the shells are arranged between said members or in the cavities of the dies, and/or
means for drawing air from inside the chamber to the outside of the chamber (e.g. a vacuum pump), and/or
spacer members placeable between the two shells when the shells are placed in the cavities of the dies in order to keep the shells slightly separated (to improve the suction of residual air from the object to be heated).

Preferred variants for the heating means are as follows:
- electrical conductors placed in at least one die or said clamping member configured to heat the two shells via electromagnetic induction when the shells are arranged in the cavities of the dies or between said clamping members, and/or
- the cavity of at least one die has a surface in which grooves are uniformly distributed, electrical conductors being placed in the grooves and configured to heat the two shells via electromagnetic induction when the shells are placed in the cavities of the dies.

In a preferred variant for the means for heating
- the cavity of at least one die has a surface in which grooves are uniformly distributed, and the apparatus comprises
- a removable covering member applied on such cavity, the removable covering member being configured to cover and plug the grooves turning them into closed channels, and
- means for circulating a heating fluid inside the closed channels.

As preferred variants for means for cooling the two shells while they are arranged in the die cavities, the apparatus comprises
means for sending a cooling fluid into channels formed in the body of the shells, and/or
means for sending a cooling fluid into channels formed in the body of the dies or said clamping members, and/or
means for introducing a cooling fluid, e.g. a liquid, into the chamber.

In particular, the apparatus comprises
- a basin containing cooling fluid, e.g. water,
- means for relatively moving the chamber and the basin to immerse the chamber into the liquid in the basin.

In particular, the apparatus comprises means for opening the chamber so that the liquid invades the chamber and submerges the shells, e.g. means for moving said or one movable wall of the chamber.

In particular, at least one die or one said rigid member is mounted integrally with the movable wall.

In particular, said means for moving comprise means mounted between a wall of the chamber and a die or one said rigid member for moving such die or said rigid member relative to such wall.

Preferably the mold shells and dies are made of the same material.

Another aspect of the invention is an apparatus comprising said press, in one or each of the variants defined herein, and said mold shells, in one or each of the variants defined herein.

In general, the mold may also be composed of more than two shells.

In general, the movements of the parts described here can be achieved by known means, e.g. electric motors, hydraulic pistons or actuators.

The advantages of the invention will be made even clearer by the following description of a preferred apparatus, in which
- fig. 1 schematically shows a molding apparatus for a composite object in a first operating configuration,
- fig. 2 schematically shows the molding apparatus in a second operating configuration,
- Figs. 3-6 show a production sequence for a molding method that can be performed using the apparatus,
- Figs. 7-9 show construction variants of the apparatus.

To avoid crowding the drawings, not all identical members are numbered.

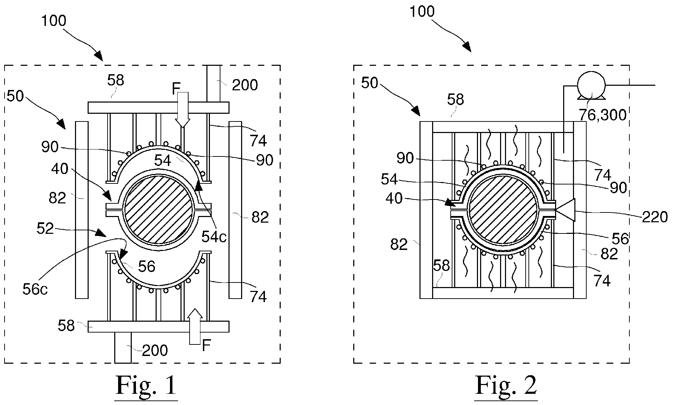

An apparatus 100, shown generally in dashed line, comprises a press 50 (fig. 1) for receiving and curing an object to be molded.

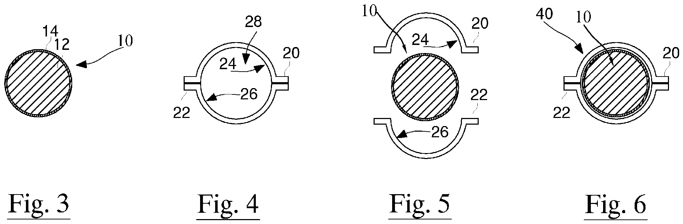

It should be noted that a hot-molding method enabled by the apparatus 100 begins (fig. 4) with the production of a composite object 10 consisting of a solid internal core 12 and a soft external carbon layer 14 that envelops the entire core 12.

The shape and thickness of the object 10 in the drawings is for illustration purposes only.

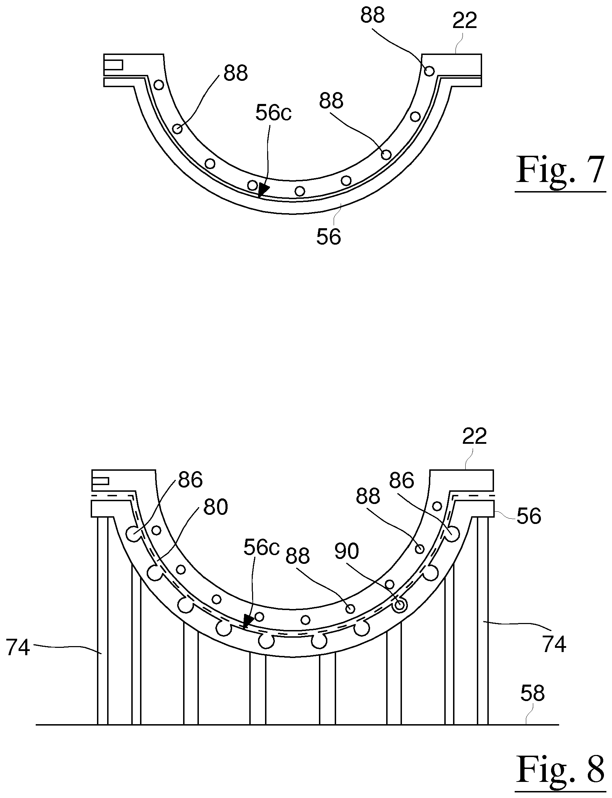

The object 10 is placed between two mold shells 20, 22 which respectively have an internal cavity 24, 26. The shells 20, 22 are combinable to obtain an overall mold cavity 28 (fig. 5) given by the juxtaposition of the cavities 24, 26 and in which to house the object 10. The object 10 is placed between the shells 20, 22 (fig. 6) and the two shells 20, 22 are superimposed or attached (fig. 7) to enclose the object 10 inside the cavity 28 and form an assembly 40.

It is also possible to arrive at the assembly 40 of fig. 6 by preparing the object 10 in a different way. The layer 14 is laminated first on the cavity 24, then the internal core 12 is placed in contact with it, then another layer 14 is laminated on the still free external surface of the core 12, and finally the shell 22 is attached to the shell 20 (fig. 5 ).

A function of the shells 20, 22 is to immobilize the object 10 during subsequent molding operations.

The press 50 comprises a curing chamber 52 and is equipped with means for raising the temperature inside the chamber 52. Two dies 54, 56 are installed in the chamber 52, shaped respectively to reproduce in negative the external shape of the two mould shells 20, 22 (see figs. 3÷6). Preferably the dies 54, 56 comprise respectively a concavity 54c, 56c of a shape complementary to the external surface of the shells 20, 22.

At least one of the dies 54, 56 is movably mounted in the chamber 52 to be able to approach the other die. For this purpose the press 50 preferably comprises means 200 for bringing the dies 54, 56 closer together and composing the cavities 54c, 56c in a single cavity, see arrows F, in which to house the assembly 40.

In particular, at least one of the dies 54, 56 is integral with a part 58 of the press 50, e.g. a wall of the chamber 52, and the part 58 is movable.

The drawing shows, for example, two moving parts 58, one for each die 54, 56.

Fig. 2 shows the press 50 after the dies 54, 56 have been brought together to press the shells 20, 22.

Although the drawing shows translatable dies 54, 56, other types of movement are also possible, e.g. rotation. It is generally sufficient that at least one of the dies 54, 56 can move closer to the other in order to include the shells 20, 22 in the cavities 54c, 56c to press them against each other.

The molding process continues with the dies 54, 56 being moved against each other to contact the shells 20, 22 and press them together (fig. 2), and the chamber 52 is closed to isolate it from the outside of press 50. The movement of the part 58 may contribute to the closing of the chamber 52, but not necessarily. That is, the part 58 is not necessarily a wall of the chamber 52. With the chamber 52 closed, the shells 20, 22 are then heated to heat the core 12 and the layer 14 (fig. 6).

In particular, the chamber 52 can be delimited by one or more movable walls 82, which are movable to provide access to the chamber 52 and close the chamber 52 during the curing.

During expansion, the core 12 pushes the layer 14 against the cavity 28, and the layer solidifies and bonds to the core 12. Since the inner core 12 will expand during curing and push the layer 14 towards the inner walls of the shells 20, 22, the molded object will copy the shape of the cavity obtained by the shells 20, 22. This is the second function of the shells 20, 22.

At the same time, the opposition of the dies 54, 56 prevents the shells 20, 22 from deforming due to temperature or repeated molding cycles. The dies 54, 56 preserve the shape of the shells 20, 22 during curing by counteracting their thermal expansion.

Once the curing is complete, the dies 54, 56 are opened, the assembly 40 is removed from the press 50 and the shells 20, 22 are separated to extract the final molded object. Then the cycle starts again for another object 10.

In a preferred embodiment, electrical conductors 90 are mounted on the external surface of the dies 54, 56, which can be powered to heat the two shells 20, 22 by electromagnetic induction. For this purpose, the two shells 20, 22 are preferably metallic, e.g. of aluminium. In this way, the induction system, which is complex and expensive by nature, is only made in the press 50, while the shells 20, 22 can remain simple and economical in structure while still having the function of shaping the final molded object.

To improve this function, as well as to preserve the relative position between the dies 54, 56 and the mold shells 20, 22 when the shells are arranged in the cavities of the dies 54, 56, preferably one or each die 54, 56 is mounted suspended in cantilevered manner from a wall of the chamber 52 by means of rigid members 74 distributed on the outer surface of the die 54, 56. One end of each rigid member 74 is constrained to the respective die 54, 56 and the opposite end is constrained to a wall of the chamber 52.

The means 200 may also be mounted only on one or each rigid member 74.

To counteract deformations during curing, preferably the mold shells 20, 22 and the dies 54, 56 are made of the same material, in particular with the materials defined above.

To promote the absence of defects in the molded product, the apparatus 100 preferably comprises means for reducing the gas pressure within the chamber 52 so as to suck residual air out of the shells 20, 22 when they are arranged in the cavities of the dies 54, 56. For example, the suction means comprises a pump 76 configured to suck air from the chamber 52 (see fig. 2).

Another advantage of the apparatus 100 is that the mold shells 20, 22 can be inserted into the dies 54, 56, even partially open, to improve the extraction of residual air from them. Preferably, the apparatus 100 comprises for this purpose spacing members 220 placed/placeable between the two shells 20, 22 when the shells are arranged in the cavities of the dies 54, 56 in order to keep the shells 20, 22 slightly separated.

In general, the shells 20, 22 can be heated in various ways.

In a preferred embodiment, the press 50 is without an induction system to avoid its cost and long production times. The shells 20, 22 are equipped with internal channels 88 obtained within their volume (see fig. 7). The heating of the assembly 40 occurs by means, installed in the press 50 or outside it, for circulating a heating fluid (e.g. at a high temperature), e.g. oil, inside the channels 88. In this case the dies 54, 56 have the function of stabilizing the shape of the shells 20, 22.

In particular, the shells 20, 22 with the channels 88 are made using *3D-printing technology.*

It is known that designing and manufacturing an induction circuit on a mold takes a long time, while sampling or a pre-test series requires speed and flexibility.

In one variant, the apparatus 100 solves the problem by integrating the use of different types of heating at successive times. For this purpose, the cavity 54c, 56c of at least one die 54, 56 has a surface in which grooves 86 are uniformly distributed. The grooves 86 are easy and quick to produce (e.g. by milling), so that the press 50 becomes operational quickly. Mounted above the grooves 86 is a covering member 80 (shown in dashed lines in fig. 8) configured to be applied on the cavity 54c, 56c and close the grooves 86 transforming them into closed channels.

Each shell 20, 22 is applied in contact with a respective covering member 80.

In this way a number of objects can be molded by sending a heating fluid into the grooves 86. The heat will be transferred by conduction to the covering member 80 and from it to the shells 20, 22. The shells 20, 22 may have the channels 88 or not.

When mass production begins, the grooves 86 instead house electrical conductors 90, which are then power-supplied to heat the shells 20, 22 via electromagnetic induction; and the member 80 is no longer needed and is removed.

This configuration of the apparatus 100 favors a fast pre-series or sampling phase through fluid heating (fig. 8), and at the same time an efficient and fast serial production phase where it is possible to exploit induction heating (see for example fig. 7).

In a preferred embodiment, the apparatus 100 allows the molding cycle to be speeded up by cooling the assembly 40 while it is still inside the press 50.

For this purpose, if the shells 20, 22 have the channels 88, the apparatus 100 comprises means for cooling the shells 20, 22 by injecting and circulating refrigerant fluid in the channels 88.

In another preferred embodiment, the shells 20, 22 and/or the dies 54, 56 are cooled by bringing them into contact with a cooling fluid (e.g. a liquid, e.g. water or oil). For this purpose, the apparatus 100 comprises means 300 (e.g. a pump) for introducing a cooling fluid into the chamber 52.

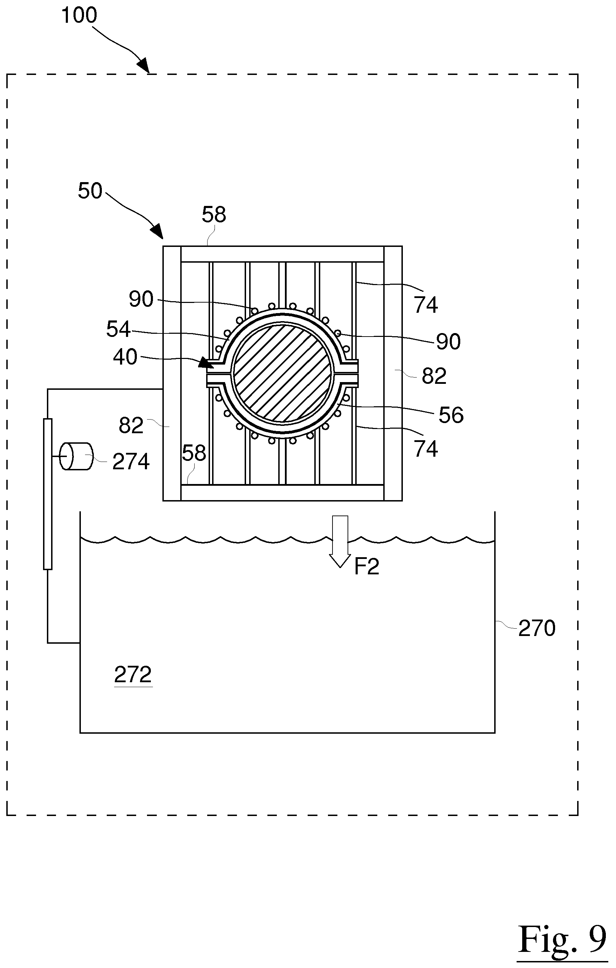

In a different preferred embodiment (fig. 9), the apparatus 100 comprises
- a basin 270 filled with cooling fluid 272, e.g. water or oil,
- means 274 for relatively moving the chamber 52 relative to the basin 270 to immerse the chamber 52 into the cooling fluid 272 (see arrow F2), and
- means - e.g. those already described above - for opening the chamber 52 so that the cooling fluid 272 invades the chamber 52 and comes into contact with, e.g. by submerging them, the shells 20, 22 and/or the dies 54, 56.

The chamber 52 may be movable relative to a stationary basin 270, or vice versa.

The described means with the function of moving parts of the apparatus 100 comprise, for example, linear or rotary actuators, which may be electric or pneumatic.

The dies 54, 56, in all their variants, may be replaced by flat press plates. In this variant the shells have at least two flat sides for abutting against the plates. The advantage is that the replacement of the dies 54, 56 is avoided when the shape of the shells 20, 22 is changed.

Preferably an electronic unit is connected to all electrical and/or electromechanical organs or means of the apparatus 100, to automatically control all the functioning of the apparatus 100.

## Claims

1. Hot molding apparatus for producing a compound object consisting of a solid internal core and an external carbon layer covering the entire core, the internal core and the external carbon layer being contained in two overlapping mold shells, comprising:
- a heating chamber;
- two clamping members installed inside the chamber configured to delimit a loading space between them to receive the two shells therein;
- means for opening and closing the chamber so as to respectively make said space accessible to the shells from the outside or isolate, e.g. hermetically, the chamber with respect to the external environment;
- means for relatively moving at least one of the two clamping members towards the other in order to press the shells against each other when respectively installed in the chamber;
- means for heating the shells while the shells are arranged in the chamber and between the clamping members.

2. Apparatus according to claim 1, wherein the clamping members comprise or consist of two dies each having a shaped cavity to house and reproduce in negative the shape of one of said mold shells.

3. Apparatus according to claim 2, comprising electrical conductors placed in at least one die and configured to heat, when electrically powered, the two shells via electromagnetic induction when the shells are disposed in the cavities of the dies.

4. Apparatus according to claim 2 or 3, wherein each die is mounted cantilevered from a wall of the chamber by means of rigid members distributed on the surface of the die, one end of each rigid member being constrained to the die and the opposite end being constrained to the wall of the chamber.

5. Apparatus according to claim 2 or 3 or 4, wherein the mold shells and dies are made of the same material, e.g. invar steel.

6. Apparatus according to claim 2 or 3 or 4, wherein the mold shells are made of carbon and the dies are made of steel, preferably invar steel.

7. Apparatus according to claim 2 or 3 or 4 or 5 or 6, comprising means for circulating a heating or cooling fluid within channels formed within the volume of the shells and/or dies.

8. Apparatus according to claim 2 or 3 or 4 or 5 or 6 or 7, comprising means for reducing the gaseous pressure within the chamber.

9. Apparatus according to claim 2 or 3 or 4 or 5 or 6 or 7 or 8, comprising spacer members configured to be placed between the two shells when the shells are arranged in the cavities of the dies, in order to keep the shells slightly separated.

10. Apparatus according to any previous claim, comprising means for inserting a refrigerant fluid into the chamber, in particular the means for inserting comprising:
a basin containing liquid, and
means for relatively moving the chamber and the basin to immerse the chamber into the liquid of the basin.
